# EUROPÄISCHE PATENTSCHRIFT

(11) **EP 1 873 460 B1**
(45) Veröffentlichungstag und Bekanntmachung des Hinweises auf die Patenterteilung: **12.03.2014**
(21) Anmeldenummer: 07110138.0
(22) Anmeldetag: 13.06.2007
(51) Int. Cl.: F24C 15/16

(54) **Haushaltsgerät und Auszugssystem für ein Haushaltsgerät**
Domestic appliance and pullout system for a domestic appliance
Appareil ménager et système de sortie pour un appareil ménager

(30) Priorität: 30.06.2006 DE 102006030228
(43) Veröffentlichungstag der Anmeldung: 02.01.2008
(73) Patentinhaber: BSH Bosch und Siemens Hausgeräte GmbH, 81739 München (DE)
(72) Erfinder: Brunner, Martin, 75172, Pforzheim (DE); Wiedenmann, Reinhard, 76356, Weingarten (DE)

(56) Entgegenhaltungen:
- EP-A- 0 994 309
- EP-A- 1 589 290
- WO-A-2004/036066
- DE-A1- 3 227 045
- FR-A- 2 791 065

## Beschreibung

Die Erfindung betrifft ein Haushaltsgerät, insbesondere Gargerät, mit mindestens zwei zueinander relativ beweglichen Kontaktelementen, die zumindest teilweise in Kontakt miteinander stehen, wobei zumindest ein Kontaktelement eine Beschichtung umfasst. Die Erfindung betrifft weiterhin ein Auszugssystem für ein Haushaltsgerät, wobei das Auszugssystem Wälzkörper aufweist, die in einem Wälzkörperkäfig angeordnet sind, wobei zumindest der Wälzkörperkäfig eine Beschichtung aufweist.

### Stand der Technik

Aus der Beschreibungseinleitung von DE 198 59 986 A1 ist ein gattungsgemäßes Auszugssystem bekannt. Das Auszugssystem weist eine ortsfeste innere Schiene und eine bewegliche äußere Schiene auf. Die bewegliche äußere Schiene ist über Kugeln auf der ortsfesten inneren Schiene gelagert. Die Kugeln sind in einem Kugelkäfig drehbar gehaltert. Der Käfig kann aus einem hochtemperaturfesten und gute Gleiteigenschaften aufweisendem Material hergestellt werden, welches eine Kombination aus Kunststoff und Kohlenstoff ist.

Aus EP 0 994 309 A2 ist eine Auszugsvorrichtung bekannt, die teilweise aus einem Garraum herausziehbare Schienen aufweist. Diese sind in ortsfesten Führungen gleitend geführt. Die Schienen und/oder die Führungen sind zumindest an ihren Gleitflächen mit einem Gleitwerkstoff versehen.

Aus DE 102 11 470 A1 ist ein gattungsgemäßes Auszugssystem bekannt, das eine ortsfeste innere Schiene, eine bewegliche Zwischenschiene und eine bewegliche Außenschiene aufweist. Die Schienen sind mit einer einfach zu reinigenden auf PTFE basierten Schicht versehen. Je nach Zugänglichkeit der Schienen bzw. von Bauteilen für Gargut und(oder den Nutzer sind unterschiedliche Beschichtungsqualitäten vorgesehen. So lassen sich Bauteilbereiche, die nach unten weisen, mit einer im Hinblick auf Reinigbarkeit und/oder Abriebsfestigkeit geringeren Beschichtungsqualitäten ausrüsten, als nach oben weisende Bauteilbereiche, die Gargutspritzern unmittelbar ausgesetzt sind.

Aus DE 199 49 239 Al ist eine Auszugsvorrichtung, insbesondere Teleskopauszugsvorrichtung, bekannt, bei der Schienen mittels Kugellager oder Rollenlager an ortsfesten Führungen geführt sind. Die Kugeln der Kugellager oder die Rollen der Rollenlager bestehen zumindest an ihrer Oberfläche aus einem selbstschmierenden Werkstoff.

Aus DE 38 15 440 ist eine Teleskopeinschubvorrichtung bekannt, die als ein Teleskopauszug mit einer ortsfesten inneren Schiene, einer rollbaren mittleren Schiene und einer rollbaren äußeren Schiene für den Gargutträger ausgebildet ist. An der mittleren Schiene sind je zwei Rollen über Bolzen gelagert. In den Bolzen sind Rillen ausgebildet, die der Aufnahme hochtemperaturbeständigen Fetts oder von Schmierpaste dienen.

Nachteilig bei diesen Vorrichtungen ist, dass der Schmierstoff entweder chemisch nicht resistent ist, insbesondere nicht laugenbeständig ist, um einer Reinigung mit aggressiven Reinigungsmitteln längerfristig zu widerstehen und / oder bei einer Reinigung in einer Geschirrspülmaschine weggespült würde.

Aus DE 10 2004 019 104 A1 ist ein Auszugssystem für ein Haushaltsgerät, insbesondere Gargerät, mit einem Auszugssystem bekannt, das Wälzkörper aufweist, die in einem Wälzkörperkäfig angeordnet sind, wobei zumindest der Wälzkörperkäfig eine Schmierstoffschicht aufweist. Von der Schmierstoffschicht des Wälzkörperkäfigs abgeriebene Schmierstoffpartikel können in dem Auszugssystem auch Lauf- oder Gleitflächen erreichen, die nicht mit einer Schmierstoffschicht in Kontakt sind. Beschrieben wird hier die Verwendung eines anorganischen Festschmierstoff, der im Gegensatz zu vielen anderen Schmierstoffen, wie etwa Flüssigschmierstoffen aus Öl oder Fett, auch bei hohen Temperaturen physiologisch unbedenklich ist. Beschrieben wird hier Graphit, das selbst bei sehr hohen Temperaturen einsetzbar sowie chemisch resistent und auch kostengünstig ist, als auch Molybdändisulfid, Bornitrid und Wolframdisulfid. Offenbart ist weiterhin Lack als Bindemittel, das den Schmierstoff an der Schiene hält. Weitere Auszugssysteme sind in DE 10 2004 019 102 A1 und DE 10 2004 019 103 A1 offenbart.

Hierbei ist nachteilig, dass der aufzubringende Lack für eine ausreichende Abriebbeständigkeit und chemische Widerstandsfähigkeit eingebrannt werden muss, was den Herstellungsprozess vergleichsweise aufwendig macht. Komplexe Bauteile lassen sich schwierig gleichmäßig pulverbeschichten, und insbesondere im Bereich von Schnittkanten und Vertiefungen weist die Pulverbeschichtung Schwächen auf.

Aus der FR 2 791 065 A ist bekannt, dass eine Gleitbeschichtung aus PEK ausgebildet ist.

Des Weiteren ist aus der DE 32 27 045 A1 ein Grundierungsmittel mit einem Gehalt an aromatischen PEK-Harz als Überzugmaterial bekannt.

Darüber hinaus ist aus der WO 2004/036 066 A2 ein Verbundmaterial zum Einsatz in Gleitlagern bekannt, wobei auf einem Verstärkungsmaterial des Gleitlagers eine Laufschicht auf Basis von PEK ausgebildet ist.

Die Aufgabe der Erfindung besteht darin, eine Möglichkeit für ein Haushaltsgerät für dauerhaft gute Lauf- oder Gleiteigenschaften bei einfacher und preisgünstiger Herstellung bereitzustellen, wobei die Lauf- oder Gleiteigenschaften vorzugsweise durch übliche Reinigungsmittel weitgehend nicht verändert werden und günstigerweise verbessert spülmaschinenfest sind.

Die Aufgabe der Erfindung wird durch ein Haushaltsgerät, insbesondere Gargerät, mit den Merkmalen des Patentsanspruchs 1 und ein Ausziehsystem mit den Merkmalen des Patentsanspruchs 2 gelöst. Gemäß Patentanspruch 1 oder 2 weist die Beschichtung zumindest ein Polyetherketon, PEK, auf.

Es ist zur verbesserten Schmierung vorgesehen, dass die PEK-Beschichtung ein Schmiermittel enthält. Insbesondere bei dem genannten Auszugssystem können aus der PEK-Schicht des Wälzkörperkäfigs abgeriebene Schmierstoffpartikel auch Lauf- oder Gleitflächen erreichen, die nicht mit einer PEK-Beschichtung in Kontakt sind. Dies reicht aus, um eine Leichtgängigkeit des Auszugssystems auch dort aufrechtzuerhalten.

Der am längsten bekannte und wichtigste Vertreter dieser Gruppe ist das Polyetheretherketon (PEEK), das hier bevorzugt verwendet wird. Seine Schmelztemperatur beträgt 335 °C. Auch umfasst sind andere Abkömmlinge der PEK-Gruppe (z.B. PEEEK, PEEKEK und PEKK), welche z. B. geringfügig andere Schmelzpunkte aufweisen (z.B. PEKK 391 °C oder PEEEK 324 °C). Polyetherketone sind gegen fast alle organischen und anorganischen Chemikalien beständig. Sie sind auch bis ca. 280 °C beständig gegen Hydrolyse. Daher sind PEKs hochgradig spülmaschinenbeständig.

PEKs lassen sich zudem auf verschiedene Weise verarbeiten, z. B. in Form einer Dispersion mit PEK-Pulver. So lassen sich im Vergleich zu Lack auch komplexe Geometrien inkl. Schnittkanten und Vertiefungen gleichmäßig, einfach und kostengünstig beschichten.

Ausserdem weisen PEKs im Gegensatz zu Lack / Bindemittel einen hervorragenden Gleitreibungskoeffizient auf und können so je nach Belastungsprofil auch ohne Schmierstoffzugabe eine ausreichend geringe Reibung sicherstellen. Dies ist insbesondere zur Spülmaschinenfestigkeit vorteilhaft, wenn nach mehreren Spülmaschinendurchgängen der Schmierstoff ausgewaschen sein sollte und so das PEK, insbesondere ein PEEK, einen "Notlauf" übernehmen kann.

Das Material der Kontaktelemente bzw. Grundkörper ist dem Fachmann bekannt und kann z. B. Metall umfassen. Durch die herkömmlichen Grundkörper wird auch bei höheren Temperaturen eine ausreichende mechanische Festigkeit sichergestellt, z. B. bei Öfen auf hoher Temperatur, z. B. 300°C über einen längeren Zeitraum.

Die Kontaktelemente können jegliche zumindest (zeitlich oder örtlich) teilweise in Kontakt miteinander (z. B. Roll-, Gleit-, Wälz-, Drehkontakt) stehende Elemente sein. Sie können z. B. Teile eines Wälzlagers sein, insbesondere ein Käfig und Wälzkörper. Andere Kontaktelemente können Schienenpaare in Gleitkontakt oder Drehlager und Drehgegenlager umfassen. Insbesondere in die PEK-Beschichtung auf sämtliche Bestandteile von Auszugssystemen anwendbar, und zwar einzeln oder in Kombination, wie sie beispielsweise in DE 10 2004 019 102 A1 und DE 10 2004 019 103 A1, DE 10 2004 019 104 A1 und DE 38 15 440 beschrieben sind.

Die Aufgabe wird auch gelöst durch ein Auszugssystem für ein Haushaltsgerät, insbesondere Gargerät, mit den Merkmalen des Anspruchs 2, mit einem Auszugssystem, das Wälzkörper aufweist, die sich in einem Wälzkörperkäfig befinden, wobei zumindest der Wälzkörperkäfig eine PEK-Beschichtung aufweist. Die weiteren Bauteile des Auszugssystems können dagegen mit einer anderen Schicht beschichtet sein, etwa einer Korrosionsschutzschicht, oder unbeschichtet sein.

Es ist besonders vorteilhaft, wenn die PEK-Beschichtung PEEK enthält.

Besonders bevorzugt ist es, wenn der Schmierstoff ein anorganischer Festschmierstoff ist. Ein derartiger Schmierstoff ist im Gegensatz zu vielen anderen Schmierstoffen, wie etwa Flüssigschmierstoffen aus Öl oder Fett, auch bei hohen Temperaturen, wie sie beispielsweise in einem Ofen auftreten, physiologisch unbedenklich. Von Vorteil ist es, wenn der Schmierstoff chemisch resistent ist, insbesondere laugenbeständig ist, um eine Reinigung in einer Geschirrspülmaschine zu überstehen. In diesem Fall kann das Auszugssystem weiterhin chemisch aggressiven Medien, beispielsweise Laugen in einer Geschirrspülmaschine, ausgesetzt werden.

Anorganische Festschmierstoffe können sich besonders einfach aus einem Schichtgefüge lösen. Ein Verteilen des anorganischen Festschmierstoffes auf den Bauteilen, die nicht mit dem Festschmierstoff beschichtet sind, ist daher besonders einfach ermöglicht. Quietschgeräusche oder eine Schwergängigkeit des Auszugssystems sind daher zuverlässig verhindert.

Es kann von Vorteil sein, wenn der Schmierstoff hochtemperaturbeständig ist. Hierzu kommen insbesondere alle Schmierstoffe in Frage, die bis zu maximalen Garbetriebstemperaturen (z. B. 300°C Reglerstellung + kurzzeitig 10 min Temperaturspitzen von 330°C) beständig sind. Besonders bevorzugt ist es dabei, wenn als Festschmierstoff Graphit verwendet wird: Graphit ist selbst bei sehr hohen Temperaturen einsetzbar sowie chemisch resistent und auch kostengünstig. Weiterhin kann als Festschmierstoff Molybdändisulfid verwendet werden. In diesem Fall kann es jedoch bei sehr hohen Temperaturen wegen der Erzeugung von S₂ problematisch werden. Sofern die Fertigungskosten nur von nachrangiger Bedeutung sind, ist als Festschmierstoff auch Bornitrid denkbar, das in allen Temperaturbereichen beständig und physiologisch unbedenklich ist. Entsprechendes gilt auch für Wolframdisulfid. Um die Abriebsfestigkeit der Schienenbeschichtung bzw. deren Schichtqualität den Anforderungen entsprechend einzustellen, sind auch Kombinationen der oben genannten Festschmierstoffe aus Graphit, Molybdändisulfid, Bornitrid oder Wolframdisulfid denkbar.

Zur einfachen Einbringung des Festschmierstoffs in die PEK-Beschichtung wird dieser vorzugsweise mechanisch eingebracht. Dies kann auf einfache Weise so geschehen, dass ein PEKbeschichtetes Bauteil in einer beispielsweise mit Schmierstoff, z. B. Graphit, gefüllten Trommel gedreht wird, wodurch sich die Schmierstoffpartikel in der Oberfläche der PEK-Schicht einlagern.

Es kann aber auch günstig sein, wenn das Schmiermittel durch Suspension in das PEK eingelagert wird.

Die Schichtdicke für die PEK-Beschichtung liegt bei mindestens ca. 15 µm - 20 µm. Geringere Schichtdicken sind machbar, aber nicht bevorzugt, da die gewollten Eigenschaften der Schmierung und besonders der Abriebsfestigkeit überproportional mit der Schichtstärke abnehmen.

Die Schmierung des Auszugssystems kann vorzugsweise über eine nur auf dem Wälzkörperkäfig vorgesehenen, insbesondere schmierstoffhaltige, PEK-Beschichtung erreicht werden. Andere Bauteile in dem Auszugssystem, etwa Schienen oder Wälzkörper, müssen daher keine Schmierfunktion übernehmen. Der Wälzkörperkäfig kann aus einem mechanisch belastbaren Material bestehen, etwa Metall, vorzugsweise Stahl. In diesem Fall kann der Käfig einerseits die Schmierung des Auszugssystems übernehmen. Andererseits kann der Wälzkörperkäfig auch als Anschlag zur Begrenzung einer Bewegung der beweglichen Bauteile ausgebildet sein. Dabei auftretende mechanische Belastungen könnten beispielsweise Wälzkörperkäfige nicht standhalten, die nur aus einem Kunststoff oder aus Kohlenstoff bestehen.

Die Schmierung des Auszugssystems kann weiter verbessert werden, wenn neben dem Wälzkörperkäfig noch mindestens ein weiteres Bauteil des Auszugssystems mit der, insbesondere schmierstoffhaltigen, PEK-Beschichtung beschichtet ist, beispielsweise eine ortsfeste und/oder eine bewegliche Schiene des Auszugssystems. Besonders bevorzugt ist es, wenn die schmierstoffhaltige PEK-Beschichtung zusätzlich auf eine bewegliche Schiene aufgebracht ist. Mittels der beweglichen Schiene wird eine verbesserte Verteilung des Schmierstoffes im Auszugssystem erreicht. Die ortsfeste Halteschiene kann dabei mit einer zweiten Schicht beschichtet sein oder unbeschichtet sein. Für den Fall, dass zwischen der beweglichen Auszugsschiene und der ortsfesten Halteschiene eine Zwischenschiene gelagert ist, ist es günstig, wenn die Zwischenschiene mit der schmierstoffhaltigen PEK-Beschichtung beschichtet ist. In diesem Fall kann die Zwischenschiene zusammen mit dem Wälzkörperkäfig sowohl die Auszugsschiene als auch die Halteschiene mit Schmierstoff versorgen. Dabei kann fertigungstechnisch vorteilig auf eine Beschichtung der Halteschiene und/oder der Auszugsschiene verzichtet werden. Alternativ kann die äußere Auszugsschiene und/oder die ortsfeste innere Halteschiene mit einer korrosionsbeständigen Schicht versehen werden. Fertigungstechnisch bevorzugt ist es, wenn der Wälzkörperkäfig, und dort insbesondere die Laschen, die die Kontaktstellen zur Kugel darstellen, vollständig mit der beschichtet ist. Im Vergleich zu einer nur teilweisen Beschichtung der Zwischenschiene kann somit der Beschichtungsvorgang wesentlich vereinfacht werden.

Spielt der Fertigungsaufwand zum Aufbringen der PEK-Beschichtung auf den Wälzkörperkäfig oder auf die Schiene nur eine untergeordnete Rolle, so ist es denkbar, mehrere PEK-Schichten mit verschiedenen Eigenschaften aufzutragen. In diesem Fall kann eine unterste Schichtlage einen großen Anteil PEK und entsprechend wenig Festschmierstoff aufweisen. Dadurch ist eine abriebsfeste Halterung des Schmierstoffs auf der Schiene gesichert. Eine oberste Lage kann dagegen wenig PEK und dafür einen hohen Anteil an Festschmierstoff aufweisen. Dadurch ist die Schmiereigenschaft z. B. der Zwischenschiene erhöhbar.

Bei mehreren Schichten oder einer Gradientenschicht kann auch die Art oder Zusammensetzung der PEK-Derivate in Anhängigkeit von der Schichttiefe unterschiedlich sein.

Darüber hinaus kann die PEK-Beschichtung weitere Füllstoffe, etwa aus Keramik enthalten, um dessen Schichtqualität oder Abriebsfestigkeit einzustellen.

Gemäß einer weiteren Ausführungsform kann das Auszugssystem herausnehmbar in dem Gargerät gehaltert sein. In diesem Fall ist einerseits eine einfache Reinigung des Auszugssystems außerhalb des Gargeräts erreicht. Andererseits kann beispielsweise bei einem Pyrolysebetrieb im Gargerät das Auszugssystem herausgenommen werden, um es nicht den hohen Temperaturen im Pyrolysebetrieb auszusetzen.

Bevorzugt kann der Wälzkörperkäfig in einem Hohlraum der beweglichen Bauteile bzw. der Schienen des Auszugssystems angeordnet sein, wodurch der Wälzkörperkäfig vor Verunreinigungen geschützt ist. Daher kann der Wälzkörperkäfig sogar eine, insbesondere schmierstoffhaltige, PEK-Beschichtung aufweisen, die zwar eine herausragende Schmiereigenschaft aufweist, jedoch aufgrund ihrer Hafteigenschaft nur schwer zu reinigen ist.

### Ausführungsbeispiel

Nachfolgend sind zwei Ausführungsbeispiele der Erfindung anhand der beigefügten Figuren beschrieben. Es zeigen:
Fig. 1 gemäß dem ersten Ausführungsbeispiel ein Auszugssystem in einem Gargerät;
Fig .2 in einer Schnittdarstellung das Auszugssystem des Gargeräts;
Fig. 3 einen Kugelkäfig des Auszugssystems; und
Fig. 4 gemäß einem zweiten Ausführungsbeispiel einen vergrößerten Ausschnitt aus einem Auszugssystem.

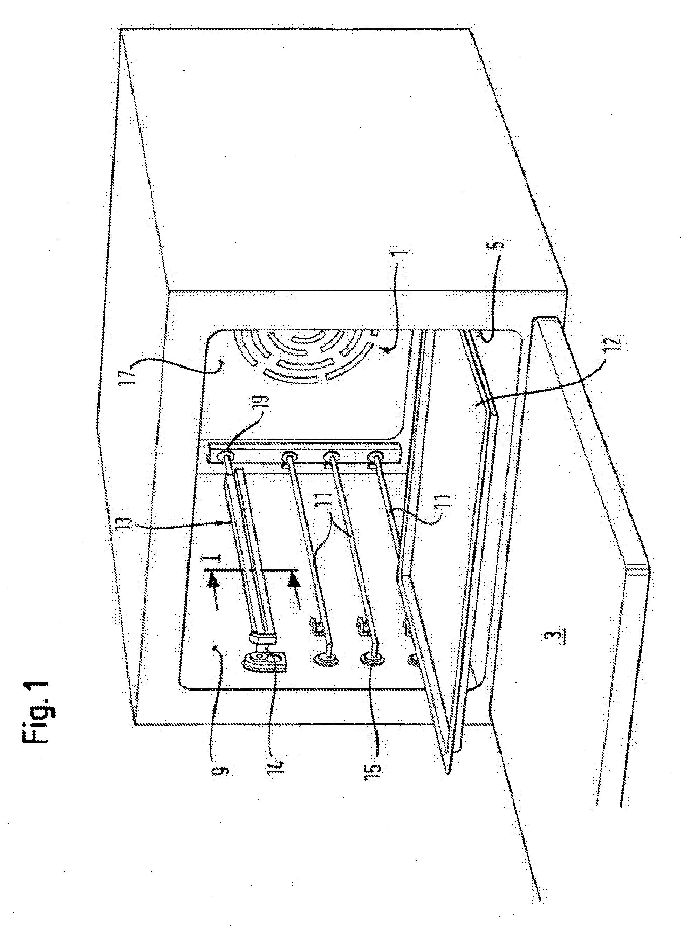

In der Fig. 1 ist gemäß dem ersten Ausführungsbeispiel ein Gargerät mit einer Gargerätemuffel 1 dargestellt, die einen Garraum eingrenzt. Das Gargerät weist eine Schwenktür 3 zum Schließen einer frontseitigen Muffelöffnung 5 auf. In der Fig. 1 ist die Schwenktür 3 in einem geöffneten Zustand dargestellt. An gegenüberliegenden Seitenwänden 9 der Gargerätemuffel 1 sind korrespondierende seitliche Führungsstäbe 11 sowie ein Auszugssystem, bestehend aus zwei gegenüberliegenden Teleskopauszügen 13, gehaltert. Die Teleskopauszüge 13 sind in einer obersten von vier horizontalen Garraumebenen herausnehmbar gehaltert. In den darunter liegenden drei Garraumebenen sind jeweils die korrespondierenden Führungsstäbe 11 herausnehmbar gehaltert. Auf den beiden korrespondierenden untersten Führungsstäben 11 stützt sich ein Backblech 12 ab, das teilweise aus der Gargerätemuffel 1 herausgeschoben ist. Die Führungsstäbe 11 sind muffelfrontseitig jeweils in einer Lagerbuchse 15 eingesteckt. Diese ist in einer Montageöffnung der Muffelseitenwand 9 montiert. Die Teleskopauszüge 13 sind mit einer Halteplatte 14 ausgebildet, die jeweils in eine Ringnut 16 der Lagerbuchse 15 eingehängt ist. Im Bereich einer Muffelrückwand 17 sind die Führungsstäbe 11 sowie die Teleskopauszüge 13 jeweils in einer Montageöffnung 19 gelagert. Sowohl die Führungsstäbe 11 als auch die Teleskopauszüge 13 sind werkzeugfrei von einem Benutzer aus der Muffel 1 zu lösen.

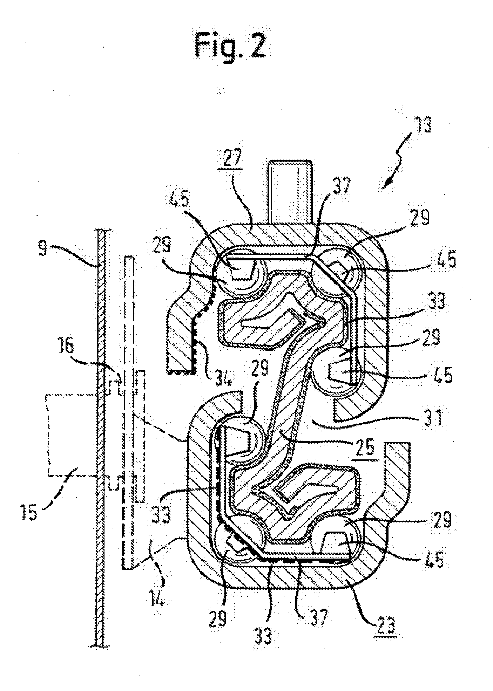

Vorliegend ist das Auszugssystem 13 als ein Teleskopauszug ausgebildet. Der Teleskopauszug 13 ist gemäß der Fig. 2 in einer in der Fig. 1 gezeigten Blickrichtung 1 im Querschnitt dargestellt. Der Teleskopauszug 13 weist eine untere Halteschiene 23 auf, die über die Halteplatte 14 ortsfest an der Muffelseitenwand 9 gehaltert ist.

Sowohl die Halteplatte 14 als auch die Lagerbuchse 15 sind in der Fig. 2 mit gestrichelten Linien dargestellt. Neben der ortsfesten Halteschiene 23 besteht der Teleskopauszug 13 aus einer beweglichen Zwischenschiene 25 sowie einer ebenfalls beweglichen Auszugsschiene 27. Die Zwischenschiene 25 ist über Kugeln 29 zwischen der Auszugsschiene 27 und der ortsfesten Halteschiene 23 gelagert.

Die Ausgestaltung der Schienen 23, 25, 27 ist nicht auf das vorliegende Ausführungsbeispiel beschränkt. So kann die Halteschiene 23 auch wie ein Rundstab 11 ausgebildet sein. Auf der Halteschiene 23 kann die Auszugsschiene auch über andere Wälzkörper gelagert geführt sein. Dabei ist die Ausgestaltung der Auszugsschiene 27 nicht auf das vorliegende Ausführungsbeispiel beschränkt. Vielmehr kann die Auszugsschiene 27 auch als ein Schlitten, ein Läufer oder ein sonstiges Auszugselement ausgebildet sein. Zwischen dem Auszugselement 27 und der Halteschiene 23 kann auch auf die Anordnung der Zwischenschiene 25 verzichtet werden.

Die Halteschiene 23 und die Auszugsschiene 27 bestehen gemäß der Fig. 2 aus zueinander identisch ausgebildeten U-ProfilTeilen aus einem unbeschichteten Stahlblech. Die beiden Schienen 23, 27 sind mit ihren offenen Seiten einander zugewandt angeordnet. Sie begrenzen einen im Wesentlichen geschlossenen Hohlraum 31, in dem die Zwischenschiene 25 angeordnet ist. Das heißt, dass zumindest im eingeschobenen Zustand des Teleskopauszuges 13 die Zwischenschiene 25 nahezu vollständig von der Auszugsschiene 27 und der Halteschiene 23 umschlossen ist. Fettspritzer, Verschmutzungen oder dergleichen werden daher von den Kugeln 29 und von der Zwischenschiene 25 ferngehalten.

Um ein leichtgängiges Herausziehen und Zusammenschieben des Auszugssystems zu gestatten, ist die Zwischenschiene 25 mit einer schmierstoffhaltigen PEEK-Schicht 33 beschichtet. Die schmierstoffhaltige PEEK-Schicht 33 ist in der Fig. 2 in übertriebener Schichtdicke dargestellt. Die Schichtdicke liegt realistischerweise in einem Bereich von mindestens zwischen 15 und 20 µm. Im Gegensatz zur Zwischenschiene 33 sind sowohl die Kugeln 29 als auch die Halteschiene 23 und die Auszugsschiene 27 nicht mit der schmierstoffhaltigen PEEK-Schicht 33 beschichtet, sondern unbeschichtet. Dadurch laufen die Kugeln 29 einerseits auf der schmierstoffhaltigen PEEK-Schicht 33 der Zwischenschiene 25 und andererseits auf den unbeschichteten Laufflächen der Halteschiene 23 und der Auszugsschiene 27.

Die Oberflächeneigenschaften der Metalloberfläche der Kugeln 29, der Halteschiene 23 sowie der Auszugsschiene 27 einerseits und der schmierstoffhaltigen PEEK-Schicht 33 andererseits sind unterschiedlich. Aufgrund dieser unterschiedlichen Oberflächeneigenschaften ergibt sich ein besonders gutes Abrollverhalten der Kugeln 29 und somit gute Laufeigenschaften des Auszugssystems.

Alternativ kann die Halteschiene 23 und/oder die Auszugsschiene 27 mit einer zweiten Schicht beschichtet sein, wie sie in der Fig. 2 mit dem Bezugszeichen 34 mit gestrichelter Linie angedeutet ist. Die beiden unterschiedlichen Schichten 33 und 34 weisen unterschiedliche Oberflächeneigenschaften auf. Insbesondere kann bei einer unterschiedlichen Oberflächenhärte das Abrollverhalten der Kugel 29 verbessert werden. Die zweite Schicht 34 kann etwa als eine korrosionsbeständige Schicht ausgebildet sein.

Vorliegend weist die schmierstoffhaltige PEEK-Schicht 33 Partikel aus einem anorganischen Festschmierstoff, wie etwa Graphit auf. Zur Herstellung der Schmierstoffschicht 33 wird zunächst ein Pulver des anorganischen Festschmierstoffs in PEEK suspendiert und damit anschließend die Zwischenschiene 25 beschichtet.

Aufgrund der sehr guten Fließeigenschaften (alle Bereiche einschließlich Schnittkanten werden erreicht) kann die PEEK-Suspension gleichmäßig aufgebracht und anschließend Wärmebehandelt werden, wobei die PEEK-Partikel zu einer PEEK-Schicht verschmelzen.

Die schmierstoffhaltige PEEK-Schicht 33 der Zwischenschiene 25 reicht aus, um auch zwischen den Kugeln 29 und der Auszugsschiene 27 bzw. der Halteschiene 23 genügend Schmierstoff einzubringen. Die in der Fig. 2 dargestellten U-profilförmigen Schienen 23, 27 eignen sich dabei besonders gut, die Zwischenschiene 33 vor Verunreinigungen zu schützen. Bei den in der Fig. 2 gezeigten Schienen genügt es, die schmierstoffhaltige PEEK-Schicht 33 nur bezüglich ihrer Schmiereigenschaften anzupassen.

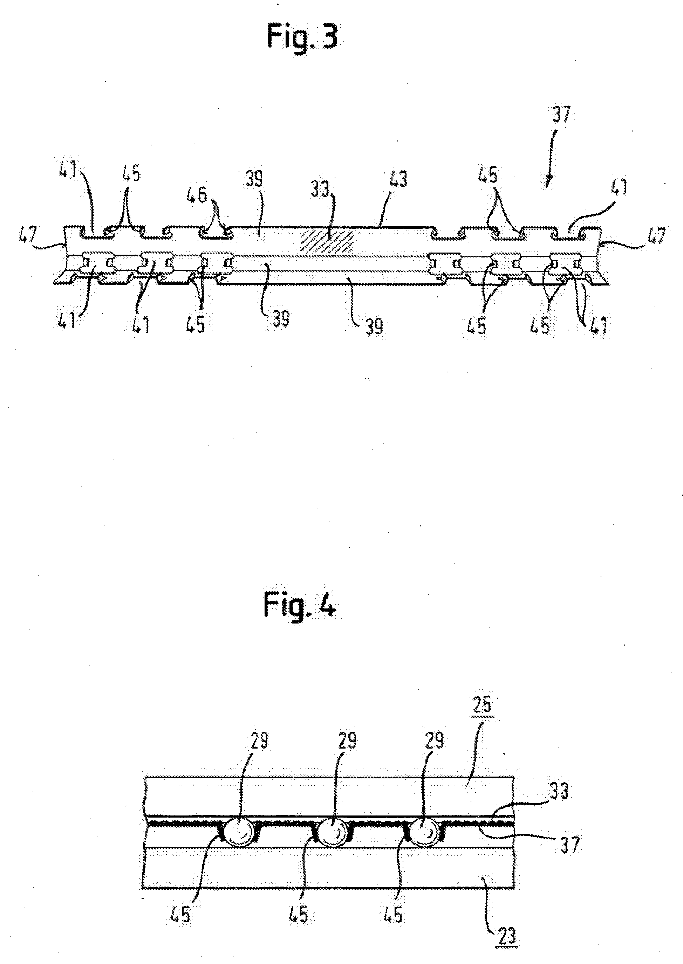

Gemäß den Fig. 2 sind die Kugeln 29 in zwei gegenüberliegenden Kugelkäfigen 37 angeordnet. Die Kugeln 29 sind in den Kugelkäfigen 37 drehbar gehaltert. Einer der Kugelkäfige 37 in der Fig. 3 gezeigt. Der Kugelkäfig 37 besteht aus einem dünnen Stahlblech, das zu einem Winkelteil mit drei im Profil trapezförmig angeordneten Seiten 39 geformt ist. In jeder der Seiten 39 sind Aussparungen 41 ausgeschnitten. Die Aussparungen 41 sind je Seite 39 in zwei hintereinander liegenden Reihen angeordnet. Die beiden Reihen sind über einen Mittelabschnitt 43 des Kugelkäfigs 37 beabstandet. Jede Aussparung 41 ist teilweise von einem abgewinkelten Prägerand 45 begrenzt, der die Kugel 29 in der Aussparung 41 hält. An einer der Kugel 29 zugewandten Seite weist der abgewinkelte Prägerand 45 eine Abriebsfläche 46 auf.

Die in den Fig. 2 und Fig. 3 gezeigten Kugelkäfige 37 sind mit der schmierstoffhaltigen PEEK-Schicht 33 beschichtet. In der Fig. 2 ist die auf dem Kugelkäfig 37 aufgebrachte schmierstoffhaltige PEEK-Schicht 33 mit gestrichelter Linie angedeutet. In der Fig. 3 ist die auf dem Kugelkäfig 37 aufgebrachte schmierstoffhaltige PEEK-Schicht 33 in Schraffur angedeutet. Dadurch kann aufgrund der Rotation der Kugeln 29 an der Abriebsfläche 46 des abgewinkelten Prägerands 45 ein geringfügiger Schmierstoffabrieb erzeugt werden. Der Abrieb wird durch die Verstellbewegung des Teleskopauszuges 13 entlang der Laufflächen der Schienen 25, 23, 27 verteilt. Dadurch wird das Auszugsverhalten des Auszugssystems dauerhaft verbessert. Ferner werden Quietschgeräusche oder eine Schwergängigkeit bei der Betätigung des Teleskopauszugs wirksam reduziert. Das Aufbringen der schmierstoffhaltigen PEEK-Schicht 33 auf den Kugelkäfig 37 erfolgt dabei wie das Aufbringen der schmierstoffhaltigen PEEK-Schicht 33 auf die jeweilige Schiene.

Die Kugelkäfige 37 sind zwischen den Schienen 23, 25, 27 in Längsrichtung frei beweglich. Die Stirnseiten 47 jedes Kugelkäfigs 37 dienen in dem in der Fig. 2 gezeigten Teleskopauszug 13 als Anschläge, die eine Längsbewegung der Schienen 23, 25, 27 begrenzen. Der Teleskopauszug 13 kann daher so lange auseinander gezogen werden, bis die Stirnseiten 47 des Kugelkäfigs 37 in Anlage mit entsprechenden, nicht gezeigten Schienen-Anschlägen kommen.

Der Kraftfluß beim Anschlag erfolgt über eine Prägung in der Schiene 23 auf Kugeln 29 von dort auf den Käfig 37. Vom Käfig 37 geht der Kraftfluß weiter auf andere Kugeln 29 und über diese weiter an eine Prägung in der Schiene 25. Über Prägungen in der Schiene 25 fließt die Kraft über Kugeln 29 in den nächsten Käfig 37. Vom Käfig 37 über die Kugeln 29 in Prägungen der Schiene 27.

In der Fig.4 ist in einem zweiten Ausführungsbeispiel ein vergrößerter Ausschnitt aus einem Auszugssystem gezeigt, in dem der Kugelkäfig 37 alternativ ausgestaltet ist. Gezeigt sind die Zwischen schiene 25 und die Halteschiene 23, die über die im Kugelkäfig 37 gehalterten Kugeln 29 verschiebbar gelagert sind. Im Unterschied zur Fig. 3 ist der abgewinkelte Prägerand 45 jeder Aussparung 41 als ein hochgezogener Kragen ausgebildet. Der hochgezogene Kragen 45 ist wie ein Zylinderabschnitt oder Hülsenabschnitt ausgebildet, der die Kugel 29 vollständig umzieht. Dadurch ist im Vergleich zur Fig. 3 die der Kugel 29 zur Verfügung stehende Abriebsfläche 46 des Kugelkäfigs 37 vergrößert. Aufgrund der Rotation der Kugeln 29 kann daher eine größere Schmierstoffmenge von dem Kugelkäfig abgetragen werde, die dem Auszugssystem zur Schmierung zur Verfügung steht.

Selbstverständlich ist die Erfindung nicht auf das gezeigte beispielhafte Auszugssystem beschränkt, sondern kann auf alle relativbeweglichen, kontaktierenden Vorrichtungen angewandt werden.

### Bezugszeichenliste

- 1: Gargerätemuffel
- 3: Schwenktür
- 5: frontseitige Muffelöffnung
- 9: Seitenwände
- 11: Führungsstäbe
- 13: Teleskopauszüge
- 14: Halteplatte
- 15: Lagerbuchse
- 16: Ringnut
- 17: Muffelrückwand
- 19: Montageöffnung
- 23: Halteschiene
- 25: Zwischenschiene
- 27: Auszugsschiene
- 29: Kugeln
- 31: Hohlraum
- 33: PEEK-Schicht
- 34: zweite Schicht
- 37: Kugelkäfige
- 39: Seiten
- 41: Aussparungen
- 43: Mittelabschnitt
- 45: Prägerand
- 46: Abriebsfläche
- 47: Stirnseiten

## Patentansprüche

1. Haushaltsgerät, insbesondere Gargerät, aufweisend mindestens zwei zueinander relativ bewegliche Kontaktelemente (29, 37), die zumindest teilweise in Kontakt miteinander stehen, wobei zumindest ein Kontaktelement eine Beschichtung (33) umfasst,
**dadurch gekennzeichnet, dass** die Beschichtung (33) zumindest ein Polyetherketon, PEK, aufweist, und ein Schmiermittel enthält.

2. Auszugssystem für ein Haushaltsgerät, wobei das Auszugssystem (13) Wälzkörper (29) aufweist, die in einem Wälzkörperkäfig (37) angeordnet sind, wobei zumindest der Wälzkörperkäfig (37) eine Beschichtung (33) aufweist,
**dadurch gekennzeichnet, dass** die Beschichtung (33) zumindest ein Polyetherketon, PEK, aufweist, und ein Schmiermittel enthält.

3. Vorrichtung nach Anspruch 1 oder 2, **dadurch gekennzeichnet, dass** die PEK-Beschichtung (33) PEEK enthält.

4. Vorrichtung nach einem der vorhergehenden Ansprüche, **dadurch gekennzeichnet, dass** das Schmiermittel einen anorganischen Festschmierstoff umfasst.

5. Vorrichtung nach Anspruch 4, **dadurch gekennzeichnet, dass** der Festschmierstoff Graphit, Molybdändisulfid, Bornitrid und / oder Wolfrämdisulfid aufweist.

6. Vorrichtung nach einem der Ansprüche 4 oder 5, **dadurch gekennzeichnet, dass** der Festschmierstoff in die PEK-Beschichtung (33) mechanisch eingebracht worden ist.

7. Vorrichtung nach einem der vorhergehenden Ansprüche, **dadurch gekennzeichnet, dass** die PEK-Beschichtung (33) zumindest teilweise mehrlagig ausgebildet ist.

8. Vorrichtung nach einem der vorhergehenden Ansprüche, **dadurch gekennzeichnet, dass** die PEK-Beschichtung(33) weitere Füllstoffe, etwa aus Keramik, enthält.

9. Haushaltsgerät mit einem Auszugssystem nach einem der Ansprüche 2 bis 8, **dadurch gekennzeichnet, dass** das Auszugssystem (13) herausnehmbar in dem Haushaltsgerät gehaltert ist.

10. Auszugssystem nach einem der Ansprüche 2 bis 8, dadurch gekenntzeichnet, dass zumindest ein, insbesondere erstes, Auszugselement (25) des Auszugssystems (13) mit der PEK-Beschichtung (33) beschichtet ist.

11. Auszugssystems nach einem der Ansprüche 2 bis 8 oder 10, **dadurch gekennzeichnet, dass** das Auszugselement eine Zwischenschiene (25) ist, die zwischen einer ortsfesten Halteschiene (23) und einer Auszugsschiene (27) zur Halterung eines Gargutträgers (13) gelagert ist.

12. Vorrichtung nach einem der vorhergehenden Ansprüche, dadurch gekenntzeichnet, dass eine Schichtdicke der PEK-Beschichtung (33) mindestens 15 µm beträgt.

## Claims

1. Domestic appliance, in particular cooking appliance, comprising at least two contact elements (29, 37) which can be moved relative to one another and are at least in partial contact with one another, wherein at least one contact element includes a coating (33),
**characterised in that**
the coating (33) comprises at least one polyetherketone, PEK, and a lubricating means.

2. Pull-out system for a domestic appliance, wherein the pull-out system (13) comprises rolling elements (29) which are arranged in a rolling element cage (37), wherein at least the rolling element cage (37) comprises a coating (33),
**characterised in that**
the coating (33) comprises at least a polyetherketone, PEK, and a lubricating means.

3. Apparatus according to claim 1 or 2, **characterised in that** the PEK coating (33) contains PEEK.

4. Apparatus according to one of the preceding claims, **characterised in that** the lubricating means includes an inorganic solid lubricant.

5. Apparatus according to claim 4, **characterised in that** the solid lubricant comprises graphite, molybdenum disulfide, boron nitride and /or tungsten disulfide.

6. Apparatus according to one of claims 4 or 5, **characterised in that** the solid lubricant has been mechanically introduced into the PEK coating (33).

7. Apparatus according to one of the preceding claims, **characterised in that** the PEK coating (33) is embodied at least partially in a number of layers.

8. Apparatus according to one of the preceding claims, **characterised in that** the PEK coating (33) contains further filling material, made of ceramic for instance..

9. Domestic appliance with a pull-out system according to one of claims 2 to 8, **characterised in that** the pull-out system (13) is removably held in the domestic appliance.

10. Pull-out system according to one of claims 2 to 8, **characterised in that** at least one, in particular first, pull-out element (25) of the pull-out system (13) is coated with the PEK coating (33).

11. Pull-out system according to one of claims 2 to 8 or 10, **characterised in that** the pull-out element is an intermediate rail (25), which is mounted between a fixed holding rail (23) and a pull-out rail (27) in order to support a food carrier (13).

12. Apparatus according to one of the preceding claims, **characterised in that** a layer thickness of the PEK coating (33) amounts to at least 15 µm.

## Revendications

1. Appareil ménager, notamment appareil de cuisson, présentant au moins deux éléments de contact (29, 37) mobiles l'un par rapport à l'autre, lesquels sont en contact mutuel au moins en partie, au moins un élément de contact comprenant un revêtement (33),
**caractérisé en ce que** le revêtement (33) contient au moins un polyéther cétone, PEK, et un lubrifiant.

2. Système de sortie pour un appareil ménager, le système de sortie (13) présentant des corps roulants (29) qui sont disposés dans une cage de corps roulant (37), au moins la cage de corps roulant (37) présentant un revêtement (33),
**caractérisé en ce que** le revêtement (33) contient au moins un polyéther cétone, PEK, et un lubrifiant.

3. Dispositif selon la revendication 1 ou 2, **caractérisé en ce que** le revêtement en PEK (33) contient du PEEK.

4. Dispositif selon l'une quelconque des revendications précédentes, **caractérisé en ce que** le lubrifiant comprend un lubrifiant solide anorganique.

5. Dispositif selon la revendication 4, **caractérisé en ce que** le lubrifiant présente du graphite, du bisulfure de molybdène, du nitrure de bore et/ou du bisulfure de tungstène.

6. Dispositif selon l'une quelconque des revendications 4 ou 5, **caractérisé en ce que** le lubrifiant solide a été appliqué mécaniquement dans le revêtement en PEK (33).

7. Dispositif selon l'une quelconque des revendications précédentes, **caractérisé en ce que** le revêtement en PEK (33) est réalisé au moins en partie en plusieurs couches.

8. Dispositif selon l'une quelconque des revendications précédentes, **caractérisé en ce que** le revêtement en PEK (33) contient d'autres substances de remplissage, par exemple en céramique.

9. Appareil ménager muni d'un système de sortie selon l'une quelconque des revendications 2 à 8, **caractérisé en ce que** le système de sortie (13) est maintenu de manière amovible dans l'appareil ménager.

10. Système de sortie selon l'une quelconque des revendications 2 à 8, **caractérisé en ce qu'**au moins un, notamment un premier élément de sortie (25) du système de sortie (13) est revêtu du revêtement en PEK (33).

11. Système de sortie selon l'une quelconque des revendications 2 à 8 ou 10, **caractérisé en ce que** l'élément de sortie est un rail intermédiaire (25) qui est logé entre un rail de maintien stationnaire (23) et une glissière (27) pour maintenir un support de produit à cuire (13).

12. Dispositif selon l'une quelconque des revendications précédentes, **caractérisé en ce qu'**une épaisseur de couche du revêtement en PEK (33) est d'au moins 15 um.
